Europäisches Patentamt

**European Patent Office**

Office européen des brevets

(19)

(11) Veröffentlichungsnummer: **0 037 520**
**B1**

(12) # EUROPÄISCHE PATENTSCHRIFT

(45) Veröffentlichungstag der Patentschrift:
06.06.84

(21) Anmeldenummer: 81102254.0

(22) Anmeldetag: 25.03.81

(51) Int. Cl.³: **B 01 D 15/00**, A 61 M 1/03,
B 01 J 20/26, C 02 F 1/28,
C 08 G 8/04 // A61M1/03,
B01J20/26, C02F1/28, C08G8/10

(54) **Verwendung von Phenol-Aldehydharzen zur Entfernung von insbesondere harnpflichtigen Stoffen aus Flüssigkeiten.**

(30) Priorität: 26.03.80 DE 3011739

(43) Veröffentlichungstag der Anmeldung:
14.10.81 Patentblatt 81/41

(45) Bekanntmachung des Hinweises auf die Patenterteilung:
06.06.84 Patentblatt 84/23

(84) Benannte Vertragsstaaten:
FR GB IT SE

(56) Entgegenhaltungen:
WO - A - 79/00115
CH - A - 547 109
DE - A - 2 646 325
DE - A - 2 701 815
DE - A - 2 734 741
GB - A - 1 552 248
US - A - 4 082 661
US - A - 4 178 241

(73) Patentinhaber: Sartorius GmbH., Weender
Landstrasse 94-108, D-3400 Göttingen (DE)

(72) Erfinder: Perl, Horst, Dr. Dipl.-Chem., Planckstrasse 8,
D-3400 Göttingen (DE)
Erfinder: Nussbaumer, Dieter, Dr. Dipl.-Chem., Am
kalten Born 39, D-3400 Göttingen (DE)
Erfinder: Klüver, Horst, Dr. Dipl.-Chem., Imbserweg 6,
D-3402 Dransfeld (DE)
Erfinder: Beer, Hans, Dr. Dipl.-Chem., Am Brachfelde 10,
D-3400 Göttingen (DE)

(74) Vertreter: Patentanwälte Müller-Boré, Deufel, Schön,
Hertel, Lewald, Otto, Postfach 26 02 47 Isartorplatz 6,
D-8000 München 26 (DE)

# 0 037 520

## Beschreibung

Die Entfernung von harnpflichtigen Stoffen aus Flüssigkeiten spielt insbesondere bei der extrarenalen Entschlackung des Blutes in künstlichen Nieren eine wesentliche Rolle, doch besteht dieses Problem auch auf anderen technischen Gebieten, z. B. bei der Entfernung von Harnstoff, Ammoniak und dgl. aus Schwimmbad- und Aquarienwasser.

In der medizinischen Dialysetechnik geht die Tendenz nach möglichst kompakten, tragbaren Geräten mit kleinem Dialysatvolumen, wobei das Dialysat oder Hämofiltrat kontinuierlich regeneriert werden muß, um ihm die Abfallstoffe zu entziehen. Diese Regeneration erfolgt in einer Patrone, die Verbindungen enthält, welche zur Umsetzung oder Absorption der Abfallstoffe befähigt sind. Aufgrund der geringen chemischen Reaktionsfähigkeit von Harnstoff und anderen harnpflichtigen Stoffen unter physiologischen Bedingungen konnte das Problem der Entfernung dieser Verbindungen aus Dialysat und Hämofiltrat noch nicht zufriedenstellend gelöst werden.

Es sind Geräte auf dem Markt, bei denen Harnstoff durch Urease in Ammoniak umgewandelt wird und andere harnpflichtige Stoffe durch Absorptionsmittel bzw. Ionenaustauscher entfernt werden, wobei als Absorptionsmedium Aktivkohle und als Ionenaustauscher z. B. Zirkoniumphosphat und Zirkoniumoxid dienen. Nachteilig dabei ist, daß Urease schwermetallempfindlich ist, so daß sorgfältig von allen Enzymgiften gereinigt werden muß, was aufwendige Zusatzmaßnahmen erfordert und ein vergrößertes Volumen der Reinigungspatrone zur Folge hat.

Es ist ferner bekannt, für den genannten Zweck komplexbildende Verbindungen einzusetzen, die an ein Polymer gebunden sind. So wird gemäß DE-A-2 734 741 Xanthhydrol oder ein Xanthhydrolderivat an ein natürliches oder künstliches Polymer, z. B. Polystyrol, gebunden. Aus der Druckschrift Owen et al, Hemoperfusion, Dialysat, Diafiltrat-Purfication, Symposium Tutzing, 11—13 September 1978, ist es bekannt, Phloroglucin und Dihydroxybenzoesäure an Ionenaustauscher, z. B. Sephadex®, zu binden und diese polymergebundenen Komplexbildner zur Harnstoffabsorption einzusetzen.

Es wurde auch versucht, makromolekulare Verbindungen, z. B. Oxystärke und Oxycellulose, direkt einzusetzen, um mit ihrer Hilfe Harnstoff über chemische Reaktionen aus dem Dialysat zu entfernen, was jedoch zu unbefriedigenden Ergebnissen führte, (vgl. die letztgenannte Druckschrift über das Symposium).

Die angegebenen polymergebundenen Komplexbildner haben verschiedene Nachteile. So ist z. B. deren Absorptionskapazität vergleichweise gering, da die Polymerkomponente zu Absorptionsleistung nicht beiträgt. Für die aus der angegebenen DE-A bekannten Polystyrolverbindung errechnet sich, daß 1 g Verbindung theoretisch 90 mg Harnstoff zu binden vermag. Bei der aus der Druckschrift Owen bekannten, Sephadexverbindung errechnet sich nach den dortigen, z. T. widersprüchlichen Angaben eine theoretische Kapazität zwischen 26,5 und 33 mg/g. Als nachteilig erweist sich ferner, daß es sich bei den bekannten Polymeren um kettenverknüpfte eindimensionale Hochpolymere handelt, bei denen die Gefahr der Freisetzung von im menschlichen Körper nicht metabolisierbaren Spaltprodukten sehr ausgeprägt ist. Ein nicht zu unterschätzender Nachteil der bekannten Produkte muß auch in deren vergleichsweise hohen Herstellungskosten gesehen werden, sowie in der Tatsache, daß sie die bei Urämikern ebenfalls harnpflichtigen Phenole und phenolischen und aromatischen Aminosäuren sowie Mittelmoleküle (300—20 000) ebenso wenig zu binden vermögen wie $Mg^{2+}$, $K^+$, $PO_4^{3-}$, $SO_4^{2-}$, Kreatinin und Harnsäure.

Die Erfindung hat sich daher die Aufgabe gestellt, eine Möglichkeit zu schaffen, um insbesondere harnpflichtige Substanzen, wie Harnstoff, Ammoniak, Amine, Aminosäuren, Phenole und Formaldehyd, aus Flüssigkeiten, insbesondere bei der extrarenalen Entschlackung von Blut, zu entfernen.

Diese Aufgabe wird durch die Erfindung dadurch gelöst, daß für den genannten Zweck oberflächenreiche unvollständig kondensierte Phenol-Aldehydharze, deren Phenolkomponente aus Resocin und/oder Phloroglucin besteht, und welche durch an sich bekannte Kondensation der Phenolkomponente unter sauren oder alkalischen Bedingungen unter Zusatz eines Katalysators mit bis zu 4 Mol Formaldehyd oder einem Gemisch von Formaldehyd und anderen Aldehyden unter milden Bedingungen in Gegenwart vergleichsweise großer Mengen Wasser so hergestellt worden sind, daß in Ortho-Stellung zur Phenol-Hydroxyl-Gruppe noch freie Methanolgruppen verblieben sind, verwendet werden.

Vorzugsweise werden diese Harze erfindungsgemäß nach einer Nachbehandlung mit $K_2 S_2 O_5$, $KHSO_3$ oder schwefliger Säure und/oder $NaBH_4$ sowie nach Einwirkung von Ca-Ionen eingesetzt.

Die CH-A-547 109 beschreibt die Verwendung von Lösungen von Kondensationsprodukten einwertiger Phenole mit mindestens zwei gegenüber Aldehyden reaktionsfähigen Kernwasserstoffatomen und Aldehyden, wobei eine derartige Lösung in dem zu behandelnden System ausgeflockt wird und an den Flocken Verunreinigungen, wie beispielsweise auch Harnstoffderivate absorbiert werden.

Unter Einsatz dieser bekannten Harze ist es jedoch nicht möglich, Harnstoffe aus Flüssigkeiten, wie Körperflüssigkeiten, insbesondere Blut, während einer extrakorporealen Behandlung derselben zu entfernen. Die Erfindung beruht auf der Erkenntnis, daß dies nur dann möglich ist, wenn in der Ortho-Stellung in bezug auf die Phenol-Hydroxyl-Gruppe der eingesetzten Phenol-Aldehydharze noch freie Methylolgruppen zurückbleiben und eine weitere Kondensation dieser Harze vermieden wird. Nur in diesem Fall ist es möglich, Harnstoff neben anderen Komponenten, wie Ammoniak, Phenol oder Farmaldehyd mit einem hohen Wirkungsgrad aus den genannten Flüssigkeiten zu entfernen.

2

Die US-A-4 082 661 betrifft die Herstellung einer Aktivkohle enthaltenden porösen Filtereinrichtung für wäßrige Flüssigkeiten, die mit einem härtbaren Phenolharz imprägniert und anschließend zur Verkohlung des Harzes gebrannt wird.

Die erfindungsgemäß hergestellten oberflächenreichen unvollständig kondensierten Phenol-Aldehydharze werden insbesondere als Füllmaterial für Patronen zur extrarenalen Entschlackung physiologischer Flüssigkeiten verwendet. Ferner können sie zur Reinigung von Wasser, insbesondere zur Entfernung von Aminspuren aus Anionaustauscherflüssigkeiten, eingesetzt werden. Stark basische Anionaustauscher setzen nämlich merkliche Mengen an Aminen frei. Diese können unter Einsatz der erfindungsgemäß hergestellten Harze entfernt werden, wobei jeweils nur geringe Harzmengen erforderlich sind. Auch der Abrieb von zum Teil aus niedermolekularen Styrolteilchen bestehenden Ionenaustauscherkörpern kann in den erfindungsgemäß hergestellten Harzen gebunden werden. Dabei werden die Harze vorher in zweckmäßiger Weise salzfrei gespült.

Eine weitere Möglichkeit zur Anwendung ergibt sich auf dem Gebiet der Biochemie. Polyfunktionelle Enzyme, die Phenole oder Amingruppen oder reaktionsfähige Doppelbindungen tragen, können mit diesen Harzen aus sehr verdünnten Lösungen abgetrennt werden. Einige dieser Enzyme behalten auch bei Kupplung mit Aldehyden ihre Aktivität. Dadurch ergibt sich die Möglichkeit, die Harze als Enzymträgematerial einzusetzen. Ähnlich wie Enzyme werden auch Proteine und Aminosäuren gebunden, die gerade bei niedrigen Konzentrationen ohne Einsatz von Flockungsmitteln selten quantitativ gebunden werden können.

Spuren von Phenolen können mit herkömmlichen Methoden aus reinem Wasser kaum entfernt werden. Demgegenüber vermögen die erfindungsgemäß hergestellten Harze diese Phenole so gut zu binden, daß sie biochemisch nicht mehr nachweisbar sind.

Aufgrund der Fähigkeit, $NH_x$-Verbindungen zu absorbieren, kann man cancerogene Stoffe , wie substituierte Hydrazine und Hydroxylamine, unter Einsatz der erfindungsgemäß hergestellten Harze binden. Von weiteren NH-Verbindungen, die unter Verwendung der erfindungsgemäß hergestellten Harze gebunden werden können, seien auch Bakterien und Viren erwähnt, da diese NH-Funktionen in großer Zahl besitzen und deshalb durch die Harze abgefangen und desaktiviert werden können. Hieraus ergibt sich die Möglichkeit einer »aktiven Filtration«.

Ferner können die erfindungsgemäß spezifizierten Harze zur Absorption von Aldehyden aus Flüssigkeiten verwendet werden. Erwähnt seien in diesem Zusammenhang beispielsweise die Bindung von aldehydischen Fuselölen.

Neben diesem Absorptionsvermögen für zahlreiche weitere harnpflichtige Substanzen besitzen die erfindungsgemäß eingesetzten Harze auch noch gegenüber bekannten Harzen den Vorteil, daß ihre theoretische Absorptionskapazität für Harnstoffe wesentlichen höher ist und bei etwa 170 mg/g liegt, daß ihre räumlich verknüpfte dreidimensionale Polymergerüste mit minimaler Löslichkeit und praktisch keiner Neigung zur Spaltungsproduktbildung darstellen, daß sie zu vergleichsweise günstigen Preisen herstellbar sind, die schätzungsweise nur ein Zehntel bzw. etwa die Hälfte derjenigen der aus der genannten DE-A- bzw. der Owen Literaturstelle bekannten Produkte betragen.

Die Herstellung von Phenol-Aldehydharzen ist bekannt. Erfindungsgemäß sind jedoch nur besonders schonend und unvollständig kondensierte Produkte mit großer Oberfläche verwendbar, die in der weiter oben beschriebenen Weise unter Einhaltung vergleichsweise großer Wasser- und Salzkonzentrationen in Gegenwart von Katalysatoren wie $Ca^{2+}$, $Mg^{2+}$, $Zm^{2+}$ oder $Fe^{3+}$, hergestellt werden.

Die Herstellung der erfindungsgemäß verwendbaren Phenol-Aldehydharze wird in vorteilhafter Weise so durchgeführt, daß

— freie Methylolgruppen in Orthostellung zur Hydroxylgruppe verbleiben,
— die Kondensation in solcher Weise abläuft, daß möglichst zwei OH-Gruppen der Phenole in Nachbarschaft zueinander stehen,
— die Reaktion unter milden Bedingungen bei etwa 40—90° C abläuft,
— die Reaktion durch Zusatz anderer Phenole und/oder Aldehyde oder Zuschlagstoffe wie Cellulose so geführt wird, daß eine weitere Kondensation von Methylolgruppen nicht möglich ist, und
— durch Zuschlagstoffe wie Salze und leicht wasserlösliche Verbindungen oberflächenreiche und/oder in Wasser quellfähige Polykondensate erhalten werden.

Je nach Reaktionsbedingungen kann auch ein difunktioneller Aldehyd im Unterschuß zur Vorkondensation eingesetzt und Formaldehyd nachträglich zur Reaktion gebracht werden.

Phenol-Aldehydharze, die mit Aldehyd im Unterschuß erhalten wurden, ohne daß Phenol meßbar in Lösung geht, binden Formaldehyd aus 37° C warmer Lösung.

Das verwendete Phenol-Formaldehyd-Verhältnis ist abhängig von der Art der eingesetzten Verbindungen. Soll das Harz viele Methylolgruppen enthalten, so sind pro Mol Phenol 2—4 Mol Formaldehyd oder Gemisch aus Formaldehyd und anderen Aldehyden nötig. Die eingesetzte Formaldehydmenge muß jedoch mindestens so groß sein, daß kein Phenol in Lösung geht.

Wird Resorcin als Phenol verwendet, so beträgt die niedrigste Formaldehydmenge 2 Mol, wobei ein leichter Überschuß an Formaldehyd den Phenolnachweis negativ werden läßt. Erfindungsgemäß verwendbar sind allerdings schon Harze, die pro Resorcin nur 1,7 Mol Formaldehyd enthalten.

3

Bei Einsatz von Resorcin und Glutaraldehyd hat sich ein Mengenverhältnis von 2 Mol Resorcin pro Mol Glutaraldehyd als vorteilhaft erwiesen. Bei höheren Resorcinmengen kann in Lösung gehendes Phenol nachgewiesen werden.

Bewährt hat sich ein Mengenverhältnis von Phenol zu Dialdehyd von 4 : 1 unter Zugabe von 0,1 bis 2,0 Mol Formaldehyd, vorzugsweise ein Verhältnis von Phenol zu Dialdehyd von 2 : 1 unter Zugabe von 1 Mol Formaldehyd.

Prinzipiell muß für jede Kombination von Phenol-Aldehyd oder deren Gemischen eine entsprechend angepaßte Verfahrensweise angewandt werden, da je nach Typ der Ausgangsverbindungen die Kondensationsbedingungen anders sind. Pyrogallol reagiert z. B. mit Formaldehyd nur in stark alkalischem oder saurem Medium, mit Glyoxal hingegen nur im stark sauren Bereich. Bei Einsatz von Acetalen muß immer stark sauer gearbeitet werden (außer bei Formaldehyd), da die Acetalspaltung sauer katalysiert wird.

Wie die in der unten angegebenen Tabelle IV aufgeführten Ergebnisse erkennen lassen, wird in besonders vorteilhafter Weise bei hohen Salzkonzentrationen und großen Mengen Wasser gearbeitet, um ein besonders oberflächenreiches Harz zu erzielen, das vergleichsweise sehr hohe Mengen an Harnstoff bindet.

Als Katalysatoren haben sich z. B. Ca—, Mg—, Zn— und FE(III)-Verbindungen bewährt, wobei grundsätzlich auch andere Verbindungen verwendbar sind, falls für deren restlose Entfernung nach erfolgter Umsetzung gesorgt wird. Bei derartigen Verbindungen handelt es sich z. B. um Li-, Ba-, Sr- und Mg-Ionen, um Salze des Cu, Cr, Ni, Co, Mn und Zn, und um Borsäure und Phosphorsäure, die sich als toxisch erweisen.

Auch $Fe^{3+}$ sollte entfernt werden, wenn es in höheren Konzentrationen vorliegt, doch können Restspuren toleriert werden, da der Tagesbedarf des Menschen immerhin 10 mg beträgt und 3 kg Harz nach 3 Tage langer Behandlung in der Regel nur 3 bis 10 mg $Fe^{3+}$ freisetzen. Bei Einsatz von $Fe^{3+}$ als Katalysator muß zuerst im sauren Bereich von etwa pH 2 bis 2,5 gearbeitet werden, da im alkalischen Bereich $Fe(OH)_3$ vorliegt. Nach dem Auswaschen zur Entfernung des Eisens ist das Vorprodukt somit sauer und bei direkter Weiterbehandlung mit Formaldehyd würden sich unter diesen Bedingungen $CH_2$-Brücken und nur sehr wenig $CH_2OH$-Gruppen bilden, wie aus der Literatur bekannt ist. Es muß daher wieder alkalisch gestellt werden, was in vorteilhafter Weise mit $Na_2CO_3$, das ja ebenfalls ein Katalysator ist, oder mit $NaHCO_3$ geschieht. Vorzugsweise wird auf einen pH-Wert von etwa 8 eingestellt, da eine zu starke Alkalisierung, z. B. auf pH-Werte von über 11, der Cannizzaro-Reaktion unter Bildung von COOH-Gruppen aus $CH_2OH$-Gruppen am Phenol Vorschub leistet. Bei dieser Arbeitsweise muß die Lösung während der Kondensationsreaktion mit Formaldehyd gewärmt werden, wenn in kleinen Ansätzen (von etwa 1 Mol) gearbeitet wird, während sich größere Ansätze von selbst erwärmen. Dieses Aufheizen erfolgt nur, um bei zweistufiger Kondensation das schon gequollene Ausgangsprodukt hinreichend unlöslich zu machen.

Die als Katalysatoren eingesetzten und wirkenden Verbindungen haben bei der erfindungsgemäßen Arbeitsweise noch die zusätzliche Funktion, mit den OH-Gruppen der Phenole Bindungen einzugehen und dabei selbst Wasser anzulagern. Durch diese Bindung von Wasser nahe den OH-Gruppen der Phenole werden die Harze quellfähig gemacht.

Je nach Typ von verwendetem Katalysator erweisen sich daher Konzentrationen von etwa 0,035 Mol/Mol Phenol bis 1 Mol/OH-Gruppe des Phenols als brauchbar bzw. zweckmäßig. Hohe Konzentrationen von bis zu 1 Mol sind z. B. bei Einsatz von NaCl, $NaHCO_3$ oder NaOH verwendbar, wobei letzteres aufgrund seiner stark alkalischen Reaktion eine schlagartige Polymerisation auslöst.

Als besonders vorteilhaft hat es sich erwiesen, z. B. $Ca^{2+}$ in Konzentrationen von 0,1 Mol pro Mol Phenol oder $Fe^{3+}$ in Konzentrationen von 0,5 Mol pro Mol Phenol im saueren wie im alkalischen Bereich einzusetzen.

Das sauer oder alkalisch kondensierte Harz wird, wenn es für medizinische Zwecke bestimmt ist, auf pH 6,8 bis 7,2 neutralisiert, da der Körper etwa pH 6,6 bis 7,4 toleriert. Da im angefallenen Harz noch vorhandene lösliche Bestandteile sowieso herausgespült werden müssen und das Spülen zu einen pH-Wert im neutralen Bereich führt, stellt das Waschen eine brauchbare Neutralisationsmethode dar. Schneller erfolgt die Neutralisation durch Zugabe von z. B. $Na_2CO_3$ bei sauer kondensierten Harzen, bzw. durch Zusatz von 0,001 N-HCl bei alkalisch kondensierten Harzen, wobei sich Salzsäure in der angegebenen Stärke deshalb bewährt, weil bei einem pH-Wert von etwa 3 die Methylolgruppen in der Kälte nur sehr langsam weiter reagieren. Nach der Neutralisation mit Chemikalien wird mit Wasser nachgewaschen.

Auf diese Weise gewonnene Harze spalten nur sehr wenig Formaldehyd ab und behalten nach schonender Trocknung ihre Aktivität über lage Zeiträume bei.

Eine Nachbehandlung der erhaltenen Harze mit z. B. $K_2S_2O_5$, $Na_2S_2O_5$, $KHSO_3$, $NaHSO_3$ oder $H_2SO_3$ und/oder $NaBH_4$ beseitigt nicht nur nicht-umgesetzten Formaldehyd durch Adduktbildung, sondern führt nach gründlichem Waschen in besonders vorteilhafter Weise zu Verbindungen, die nach Beladen mit Calciumionen, z. B. in Form von $Ca(HCO_3)_2$, Kalium Magnesium, Phosphat und Sulfat absorbieren und Calcium freisetzen und außerdem in der Lage sind, den pH-Wert von schwach alkalischen oder sauren Lösungen in den Neutralbereich zu verschieben.

Diese Nachbehandlung erfolgt daher zweckmäßig in der Weise, daß zunächst der Restformaldehydgehalt im Harz bestimmt und danach mit einem zehnfachen Überschuß an Behandlungsmittel gespült wird. Anschließend wird mit kaltem Wasser gespült und zwar bei Verwendung von schwefelhaltigen Behandlungsmitteln solange, bis der Nachweis auf $Na^+$ und $SO_3^{2-}$ negativ ist. Die als Katalysatoren und Zuschlagstoffe verwendeten $Ca^{2+}$ und $Fe^{3+}$-Ionen bilden vermutlich Chelatgerüste, in denen sie bis zu sechsfach an Resorcin-OH Gruppen assoziiert sind. Durch die nachfolgende Kondensation werden diese Ionen bis zu einem gewissen Maße irreversibel gebunden unter Erzeugung von oktaedrischen Räumen mit bis zu 6 OH-Gruppen, ähnlich Zeolithen. Darin befindliches Eisen kann $PO_4^{3-}$ als Eisenphosphat binden und darin befindliches $Ca^{2+}$ fällt $SO_4^{2-}$ als schwerlösliches $CaSO_4$, während $Mg^{2+}$ gegen $Ca^{2+}$ leicht ausgetauscht werden kann oder in durch Spülen erzeugte Lücken eindringt. In gleicher Weise wird Kalium absorbiert, während $Fe^{3+}$ auf Grund seiner höheren Kernladungszahl besser gebunden bleibt.

Für die Trocknung, die sich schon deshalb als notwendig erweist, weil feuchte Harze unter Formaldehydabspaltung reagieren, erweist sich Erwärmen als abträglich, weil dadurch Temperaturen erreicht werden, die zur Weiterkondensation ausreichen und zu einem inaktiven, mit Wasser nicht mehr quellfähigen Harz führen. Eine chemische Trocknung über üblichen bekannten Mitteln ist durchführbar, hat jedoch einen hohen Chemikalienverbrauch zur Folge. Es bietet sich daher die Sprüh- oder Gefriertrocknung an, wobei sich die Gefriertrocknung gut bewährt hat.

Nach der Kondensation fällt das Harz in der Regel als fester Block an und wenn z. B. 1 kg Resorcin mit Formaldehyd und $CaCl_2$ als Katalysator mit $Na_2CO_3$ alkalisch kondensiert wird, liegt das Polymerisat als fester hellgelber Block vor, der unter Luftzutritt langsam rot wird und bis zu 8 kg Wasser enthalten kann.

Eine Zerkleinerung dieses Feststoffs auf eine definierte Korngröße erweist sich insbesondere dann als vorteilhaft, wenn der Einsatz für medizinische Zwecke erfolgt und ein ausreichender und besonders gleichförmiger Durchfluß von Dialysat erreicht und eine Verstopfung von Filtern durch feine Anteile verhindert werden soll. Korngrößen von etwa 0,02 bis 0,2 mm, vorzugsweise von 0,05 bis 0,1 mm, haben sich besonders bewährt.

Das zerkleinerte, gegebenenfalls konditionierte und getrocknete Harz ist als Füllmaterial für Patronen zur extrarenalen Entschlackung physiologischer Flüssigkeiten verwendbar, wobei der apparative Aufwand geringer ist als bei bekannten Handelsprodukten, z. B. dem unter dem Handelsnamen »Redy« bekannten, mit Urease arbeitenden Dialysesystem, da z. B. die Entfernung von Enzymgiften und die Entgasung von $CO_2$ entfällt.

Für eine Dauer-Hämofiltration oder -Dialyse, z. B. Peritonealdialyse, können derartige Patronen ausgestaltet werden. Eine Trockenpatrone, die in herkömmlicher Weise, d. h. alle 3 Tage für eine Dauer von 4—5 h, einsetzbar ist, kann z. B. etwa 3 kg Harz vom Typ gemäß folgenden Beispielen 1 oder 2, etwa 1 kg Harz vom Typ gemäß Beispiel 3 und etwa 150—200 g Aktivkohle enthalten. Gegebenenfalls ist Aktivkohle unnötig, doch sollte sie dem Harz zur Bindung von Kreatinin und Harnsäure vorgeschaltet werden. Eine solche Patrone muß dann in üblicher bekannter Weise vorgespült werden.

Eine kleinere tragbare Patrone, die bereits gespült und daher gebrauchsfertig ist, braucht nur etwa 250 g Harz vom Typ gemäß Beispiel 1 oder 2, etwa 100 g Harz vom Typ gemäß Beispiel 3 und etwa 50 g Aktivkohle zu enthalten. Eine derartige Patrone ergibt dann zusammen mit einem geeigneten Miniaturfiltermodul für Langzeitanwendungen eine tragbare künstliche Niere, wobei die Patrone alle 6 h zu wechseln ist.

Die Bindung von Ammoniak, der im Harz nur in geringen Mengen vorliegt, kann ebenfalls mit Hilfe der erfindungsgemäß verwendbaren Harze erfolgen, oder aber in bekannter Weise mit Hilfe von Zirkonphosphat. Von besonderer Bedeutung ist die Ammoniakabsorption mit Hilfe der erfindungsgemäß verwendbaren Harze jedoch z. B. bei der Reinigung von Abwässern oder der Rückhaltung von Aminen aus Ionenaustauschersäulen für Totalentsalzung, da stark basische Ionenaustauscher in der OH-Form besonders leicht Amine abgeben.

Daß es erfindungsgemäß verwendbare Harze gibt, die Formaldehyd zu absorbieren vermögen (vergleiche Beispiel 3), ist besonders deshalb von besonderem Vorteil, weil diese zum Binden des aus dem Absorberharz freigesetzten Formaldehyds benötigt werden.

Da aus Messungen der $NH_3$-Absorption bekannt ist, daß die Harze immer etwa 10 bis 20% mehr Ammoniak als Harnstoff aufnehmen, ist der Schluß gerechtfertigt, daß für die Absorption immer zwei $CH_2OH$- und zwei OH-Gruppen nahe beisammen stehen müssen, was durch Verwendung bekannter ortho-Katalysatoren einfach zu erreichen ist.

Die folgenden Beispiele sollen die Erfindung näher erläutern.

## Beispiel 1

1 Mol Resorcin und 0,33 Mol $FeCl_3$ wurden in 250 ml Wasser aufgelöst und mit gesättigter $Na_2CO_3$-Lösung auf pH 8 gestellt, worauf 1 Mol Formaldehyd (37%ige Lösung mit 10% Methanol) zugesetzt wurde. Die Reaktion wurde so geführt, daß die Temperatur unter 60° C blieb.

Nach Abklingen der Reaktion wurde das Produkt vier Stunden lang bei 60° C gehalten und danach mit HCl auf pH 2 gestellt und eisenfrei gewaschen. Nach Einstellen des pH-Werts ins alkalische Bereich auf einen pH unter 10 mit $Na_2CO_3$ wurde weiteres Formaldehyd (2 Mol) zugegeben und 4 h bei 70°C gehalten.

Das gebildete Harz wurde neutralisiert, gewaschen, bis es frei von Salzen und Formaldehyd war, auf eine Korngröße zwischen 0,05 und 0,1 mm gebracht und mit $K_2S_2O_5$ und $NaBH_4$ konditioniert. Behandeln mit $Ca(HCO_3)_2$-Lösung und anschließendes Waschen und Gefriertrocknen lieferte eine Verbindung, die aus Humanhämofiltrat ca. 15 mg Harnstoff, 0,9 mg $PO_4^{3-}$, 0,7 mmol $K^+$, und 2,5 μmol Phenol pro Gramm Harz zu absorbieren vermochte.

## Beispiel 2

Zur Durchführung einer sauren Kondensation wird eine Lösung, die 1 Mol Resorcin in 300 ml Wasser und 1 Mol Formaldehyd als 37%ige Lösung enthielt, unter Rühren in eine Lösung eingetropft, die 0,5 Mol $FeCl_3$ in 100 ml 0,1 N-HCl enthielt. Es bildete sich ein gequollenes Vorprodukt in Form eines Festkörpers.

Durch Erwärmen wurde dieses Vorprodukt unlöslich gemacht und danach durch Waschen mit verdünnter (0,01 N)HCl von Eisen(III)chlorid befreit. Die Anlagerung weiterer Methylolgruppen erfolgte wie in Beispiel 1 bei einem pH-Wert 8 bis 10. Das erhaltene Verfahrensprodukt war mit dem gemäß Beispiel 1 erhaltenen Harz vergleichbar.

## Beispiel 3

Dieses Beispiel beschreibt die Herstellung eines zur Bindung von Formaldehyd befähigten Phenol-Aldehydharzes durch Kondensation mit Aldehyd um Unterschuß.

1 Mol Resorcin und 0,5 Mol Glutardialdehyd wurden in 500 ml Wasser mit 1 N—$H_2SO_4$, Oxalsäure oder 1 N—HCl unter erwärmen sauer kondensiert bis zur einsetzenden Reaktion. Das Verfahrensprodukt wurde auf eine Korngröße wie in Beispiel 1 zerkleinert und gesiebt, von Glutaraldehyd und löslichen Verbindungen freigewaschen und gefriergetrocknet. Das erhaltene Harz absorbierte unter physiologischen Bedingungen aus einer 37°C warmen Lösung bis zu 200 μmol Formaldehyd.

## Beispiel 4

Die folgenden Tabellen zeigen einen Vergleich bekannter Harnstoff-Absorptionsmittel mit erfindungsgemäß verwendbaren Harzen in bezug auf Harnstoffabsorption.

Die Tabellen I und II zeigen die Ergebnisse von Messungen bei 37°C und die Tabellen III und IV zeigen Werte bei davon abweichenden Temperaturen und verschiedenen Konzentrationen.

In den Tabellen wird auf folgende Literaturstellen bezug genommen:

(1)  C. Giordano et al. Kidney Int. 10 : 284, 1976
(2)  E. Denti et al. Kidney Int. 7 : 400, 1975
(3)  K.Hintzen itv-Informationen 8 : 2, 18, 1978
(4)  C. Giordano et al. Kidney Int. 10 : 260, 1976
(5)  H.-K. Man, T. Drücke, Kidney Int. 10 : 269, 1976
(6)  C. Giordano Kidney Int. 13 : 138—144, 1978
(7)  DE-A-2 734 741
(e)  Eigene Messungen an Harzen mit Harnstofflösung und 0,9% NaCl durchgeführt in Universitätsklinik Göttingen 1979.

Die Versuche wurden vorwiegend unter Bedingungen durchgeführt, die bei der Hämofiltration vorliegen und klinischen Erwartungen entsprechen, nämlich

eine Behandlungszeit von 4 h,
eine Temperatur von 37°C,
ein mittlerer Harnstoffgehalt von 225 mg%,
eine in 4 h aufzuarbeitende Menge von 20 l Lösung,
eine physiologische Kochsalzlösung mit im wesentlichen ca. 0,9% NaCl.

Die in Tabelle IV aufgeführten Harze wurden wie folgt hergestellt:

A  Sauer kondensiertes Harz nach Beispiel 2, wobei auf den zweiten Teil der Darstellung und auf Eisenzugabe verzichtet wurde.
B  Alkalisch kondensiertes Harz nach Beispiel 2, wobei auf den ersten Teilschnitt der Vorkondensation verzichtet wurde.

C   Phenol-Resorcin-Mischharz mit 3 Mol Formaldehyd.
D   Resorcinharz, wobei zur Darstellung wie im Beispiel 1, zweiter Absatz, verfahren wurde.
F   Zu einer Lösung von 1 Mol Resorcin in 100 ml $H_2O$ wurden 3 Mol Formaldehyd als 37%ige wäßrige Lösung zugegeben und mit 3 Mol NaOH als 27%ige wäßrige Lösung kondensiert, wobei die Lösungen vorher auf 1° C gekühlt wurden. Die Reaktion trat sofort ein, wobei das Harz aufquoll.
G   Gleicher Ansatz wie A, es wurde jedoch ein weniger HCl bei niedrigeren Temperaturen schonender kondensiert.
L   Phloroglucin-Formaldehydharz, alkalisch kondensiert mit 3 Mol Formaldehyd pro Mol Phloroglucin.
R   Phenol-Hydrochinon-Mischharz in molaren Verhältnissen nach Beispiel 1 dargestellt.
S   Hergestellt wie F, jedoch mit der Ausnahme, daß die Formaldehyd- und die NaOH-Lösung zuvor mit NaCl gesättigt wurden.
T   Hergestellt nach Beispiel 1 mit zusätzlich einkondensiertem Calcium (0,1 Mol pro Mol Resorcin).

Zur Durchführung der Harnstoffbestimmungen wurden jeweils 10 ml Testlösungen mit einem Gehalt an 150, 200, 300, 500, 1000 mg Harnstoff pro 100 ml 0,9%ige NaCl-Lösung nach 5, 15, 30, 45, 75 min, 2 h, 4 h und 24 h mit 1 g Trockensubstanz an Harz geschüttelt und die Restharnstoffkonzentration wurde photometrisch gemessen. Da gefriergetrocknete Harze nur noch sehr wenig Wasser (2—3‰) enthalten, können sie als Trockensubstanz angesehen werden.

Tabelle I

| Typ + Nummer | Temperatur | Ausgangs C mg/100 ml | Absorptionsvermögen (mg/g Trockensubstanz) | Lit. |
|---|---|---|---|---|
| **Aktivkohlen** | | | | |
| Merck 2186 | 37° | 100 | 4,5 | 1 |
| Merck 2515 | 37° | 100 | 4,5 | 3 |
| Darco® G 60 | 37° | 100 | 3,71 | 3 |
| Norit® A | 37° | 100 | 5,51 | 3 |
| S 700 | 37° | 100 | 7,3 | 2 |
| K 400 | 37° | 100 | 4,9 | 2 |
| Durchschnitt | | | 5,5 | |
| **Ionenaustauscher** | | | | |
| Amberlite® XAD 2 | 37° | 100 | 0,99 | 3 |
| Amberlite® XAD 4 | 37° | 100 | 1,80 | 3 |
| Amberlite® XAD 7 | 37° | 100 | 0,33 | 3 |
| Lewapol® 18/65 | 37° | 100 | 2,98 | 3 |
| Lewatit® OCl33 | 37° | 100 | 1,03 | 3 |
| Durchschnitt | | | 1,42 | |
| **Polysaccharide** | | | | |
| Oxystärke | 37° | 100 | 7,03 | 4 |
| Oxycellulose | 37° | 100 | 5,18 | 5 |
| | | | Reaktionszeiten hier nicht angegeben | |

Tabelle II

| Typ + Nummer | Temperatur | Ausgangs C mg/100 ml | Absorptionsvermögen mg/g | Lit. |
|---|---|---|---|---|
| Harz S | 37° | 218 | 16 | e |
| | | | Hämofiltratwert nach 2 h | |

Tabelle III

| Typ + Nummer | Temperatur | Ausgangs C mg/100 ml | Absorptionsvermögen mg/g | Lit. |
|---|---|---|---|---|
| Aktivkohle | | | | |
| Merck 2186 | 1° | 100 | 11,28 | 1 |
| Darco® G 60 | 2° | 100 | 5,78 | 3 |
| Norit® A | 2° | 100 | 5,15 | 3 |
| Merck 2515 | 2° | 100 | 8,79 | 3 |
| Polysaccharide | | | | |
| Oxystärke | 60° | 100 | — (Gel) | |
| Oxycellulose | 60° | 100 | 12,95 | 5 |
| Oxycellulose | 0° pH 1 | | 60 | 6 |
| Sonstige | | | | |
| Xanthhydrolan | | | | |
| Polystyrolharz | ? | 356,2 | 12 mg/g Xanthhydrol | 7 |
| | | | keine Reaktionszeit angegeben | |

Tabelle IV

| Typ + Nummer des erfindungsgemäß verwendbaren Harzes | Temperatur | Ausgangs C mg/100 ml | Absorptionsvermögen mg/g | Lit. |
|---|---|---|---|---|
| A | 75° | 1000 | 64 nach 75 min | e |
| | 75° | 400 | 20,7 nach 75 min | e |
| | 75° | 150 | 12 nach 75 min | e |
| | 25° | 200 | 8,9 nach 4 h | |
| | | 500 | 27,6 nach 4 h | |

**0 037 520**

Fortsetzung

| Typ + Nummer des erfindungsgemäß verwendbaren Harzes | Temperatur | Ausgangs C mg/100 ml | Absorptionsvermögen mg/g | Lit. |
|---|---|---|---|---|
| B | 25° | 200 | 17,2 nach 4 h | |
| C | 75° | 1000 | 11,59 nach 75 min | |
| D | 25° | 200 | 15,84 nach 4 h | |
| F | 25° | 200 | 11,62 nach 4 h | |
| G | 25° | 200 | 16,78 nach 4 h | |
| L | 25° | 200 | 12,27 nach 4 h | |
| R | 25° | 200 | 16,47 nach 4 h | |
| | 25° | 300 | 28,54 nach 4 h | |
| | 25° | 500 | 53,72 nach 4 h | |
| S | 25° | 200 | 18,61 nach 4 h | |
| | | 300 | 28,5 nach 4 h | |
| | | 500 | 54,2 nach 4 h | |
| T | 25° | 1000 | 104 nach 24 h | |

Die Ergebnisse zeigen, daß insbesondere bei der physiologisch interessanten Temperatur von 25° C die erfindungsgemäß verwendbaren Harze gegenüber bekannten Harnstoff-Absorptionsmitteln zu überlegenen Ergebnissen führen.

Die Ergebnisse der Tabelle IV zeigen ferner, daß oberflächenreiche Harze erfindungsgemäß in besonders vorteilhafter Weise verwendbar sind. So läßt ein Vergleich der Harnstoff-Absorption der Harze F und S erkennen, daß aus einer Lösung von 200 mg% Harnstoff das Harz F 11,62 mg Harnstoff, das Harz S demgegenüber 18,6 mg Harnstoff pro g Festsubstanz absorbiert, woraus sich ergibt, daß die verbesserten mikroporösen Eigenschaften offensichtlich auf einen Einschluß von Kochsalz und Wasser bei der Harzherstellung zurückzuführen sind. Das Einkondensieren von monofunktionellen Aldehyden und Phenolen vermag auf chemischem Wege den gleichen Effekt zu erzielen.

Wurden 10,0 Mol-% Resorcin durch Phenol ersetzt (gleicher Ansatz wie bei Harz F, jedoch mit 0,9 Mol Resorcin und 0,1 Mol Phenol), so erniedrigte sich die Harnstoff-Absorption nicht, obwohl ein reines Phenol-Formaldehydharz (Ansatz wie bei Harz F, jedoch 1 Mol Phenol statt 1 Mol Resorcin) geringere Harnstoffmengen absorbierte.

**Patentansprüche**

1. Verwendung von oberflächenreichen unvollständig kondensierten Phenol-Aldehydharzen, deren Phenolkomponente aus Resorcin und/oder Phloroglucin besteht, und welche durch an sich bekannte Kondensation der Phenolkomponente unter sauren oder alkalischen Bedingungen unter Zusatz eines Katalysators mit bis zu 4 Mol Formaldehyd oder einem Gemisch von Formaldehyd und anderen Aldehyden unter milden Bedingungen in Gegenwart vergleichsweise großer Mengen Wasser so hergestellt worden sind, daß in ortho-Stellung zur Phenol-Hydroxylgruppe noch freie Methylolgruppen verblieben sind zur Entfernung von harnpflichtigen Stoffen, insbesondere Harnstoff und Ammoniak, sowie von Phenolen und Formaldehyd als Flüssigkeiten.

2. Verwendung nach Anspruch 1, dadurch gekennzeichnet, daß die Harze nach einer Nachbehandlung mit $K_2S_2O_5$, $KHSO_3$ oder schwefeliger Säure und/oder $NaBH_4$ sowie nach Einwirkung von Kalziumionen eingesetzt werden.

9

3. Verwendung nach den Ansprüchen 1 bis 2, dadurch gekennzeichnet, daß die Kondensation der Harze unter Zusatz anderer Phenole oder Zuschlagstoffe durchgeführt wird.

4. Verwendung nach den Ansprüchen 1 bis 3, dadurch gekennzeichnet, daß als Zuschlagstoffe leicht wasserlösliche Verbindungen, insbesondere NaCl oder FE(III)- oder Ca-Salze eingesetzt werden.

5. Verwendung nach den Ansprüchen 1 bis 4, dadurch gekennzeichnet, daß die Kondensation der eingesetzten Harze durch Einsatz von die ortho-Substitution begünstigenden Katalysatoren so gesteuert wird, daß 2 OH-Gruppen der Phenole und 2 $CH_2OH$-Gruppen in Nachbarschaft zueinander stehen.

## Claims

1. The use of large-surface area, incompletely condensed phenol-aldehyde resins, whose phenol component consists of resorcinol and/or phloroglucinol, and which have been prepared by per se known condensation of the phenol component under acid or alkaline conditions under addition of a catalyst with up to 4 mols formaldehyde or a mixture of formaldehyde and other aldehydes under mild conditions in the presence of comparatively large quantities of water in a manner such that there still have remained free methylol groups in ortho-position to the phenol-hydroxyl-group, for the removal of substances which must be discharged with the urine, in particular urea and ammonia, as well as phenols and formaldehyde from liquids.

2. The use as according to claim 1, characterized in that the resins are utilized after an after-treatment with $K_2S_2O_5$, $KHSO_3$ or sulfurous acid and/or $NaBH_4$ as well as after the action of calcium ions.

3. The use as according to claims 1 to 2, characterized in that the condensation of the resins is carried through under addition of other phenols or additives.

4. The use as according to claims 1 to 3, characterized in that readily water-soluble compounds, in particular NaCl or Fe(III)- or Ca-salts, are used as additives.

5. The use as according to one of claims 1 to 4, characterized in that the condensation of the resins used is controlled through the utilization of catalysts enhancing the orthosubstitution such that 2 OH-groups of the phenols and 2 $CH_2OH$-groups are in neighboring position to one another.

## Revendications

1. Utilisation, pour éliminer de liquides des substances dues à l'urine, notamment urée et ammoniac, ainsi que des phénols et du formaldéhyde, de résines de phénolaldéhydes incomplètement condensées dont le composant phénolique est constitué de résorcinol et/ou de phloroglucinol, et qui sont préparées par une condensation en soi connue du composant phénolique, en conditions acides ou basiques et avec addition d'un catalyseur, avec jusqu'à 4 mol de formaldéhyde ou d'un mélange de formaldéhyde et d'autres aldéhydes, en conditions modérées en présence de quantités relativement importantes d'eau de sorte que les groupes méthylol encore libres, en position ortho par rapport au groupe hydroxyle du phénol, soient stables.

2. Utilisation selon la revendication 1, caractérisée en ce que les résines sont utilisées après un post-traitement par $K_2S_2O_5$, $KHSO_3$ ou l'acide sulfureux et/ou $NaBH_4$, et après action d'ions calcium.

3. Utilisation selon l'une quelconque des revendications 1 ou 2, caractérisée en ce que la condensation des résines est réalisée sous addition d'autres phénols ou additifs.

4. Utilisation selon l'une quelconque des revendications 1 à 3, caractérisée en ce qu'on utilise en tant qu'additifs des composés facilement solubles dans l'eau, en particulier NaCl ou des sels de Fe(III) ou de Ca.

5. Utilisation selon l'une quelconque des revendications 1 à 4, caractérisée en ce que la condensation des résines utilisées est réglée par l'utilisation de catalyseurs favorisant la substitution ortho, de telle sorte que deux groupes OH des phénols et deux groupes $CH_2OH$ se trouvent en position de voisinage les uns par rapport aux autres.